# EUROPÄISCHE PATENTSCHRIFT

(11) **EP 4 049 079 B1**
(45) Veröffentlichungstag und Bekanntmachung des Hinweises auf die Patenterteilung: **08.01.2025**
(21) Anmeldenummer: 20807289.2
(22) Anmeldetag: 22.10.2020
(51) Int. Cl.: G02B 21/00, G02B 21/10, G02B 21/16, G02B 21/36

(54) **OPTISCHES SYSTEM FÜR EIN LICHTBLATTMIKROSKOP**
OPTICAL SYSTEM FOR A LIGHT SHEET MICROSCOPE
SYSTÈME OPTIQUE POUR MICROSCOPE À FEUILLE DE LUMIÈRE

(30) Priorität: 23.10.2019 DE 102019128681
(43) Veröffentlichungstag der Anmeldung: 31.08.2022
(73) Patentinhaber: Leica Microsystems CMS GmbH, 35578 Wetzlar (DE)
(72) Erfinder: SCHUMANN, Christian, 35423 Lich (DE)
(74) Vertreter: Schaumburg und Partner Patentanwälte mbB
(86) Internationale Anmeldenummer: PCT/EP2020/079681
(87) Internationale Veröffentlichungsnummer: WO 2021/078825

(56) Entgegenhaltungen:
- DE-A1- 102014 102 215
- DE-A1- 102014 102 215
- DE-A1- 102016 103 182
- DE-A1- 102016 103 182
- DE-A1- 102018 204 940
- DE-A1- 102018 204 940
- DE-A1- 3 615 842
- DE-A1- 3 615 842
- US-A1- 2005 128 573
- US-A1- 2005 128 573

## Beschreibung

### Technisches Gebiet

Die Erfindung betrifft ein optisches System für ein Lichtblattmikroskop, mit einer Transportoptik, die ausgebildet ist, ein Lichtblatt zum Beleuchten einer schräg zur optischen Achse der Transportoptik liegenden Probenebene in eine Probe abzubilden und die beleuchtete Probenebene in den Zwischenbildraum abzubilden. Die Erfindung betrifft ferner ein Verfahren zum Beleuchten einer Probe in einem Lichtblattmikroskop.

### Hintergrund

In der Schiefebenenmikroskopie nach Dunsby (US 8 582 203 B2) liegt die Detektionsebene schief in der Probe. Dies führt dazu, dass nur ein beschränkter Winkelbereich und damit nur ein Teilbereich der Raumfrequenzen der Probe detektiert wird, im Gegensatz zur Abdeckung des Frequenzraumes bei der Detektion einer Ebene senkrecht zur optischen Achse. Weiterhin propagiert das Beleuchtungslichtblatt bis zum Probenbereich durch einen Teil der Probe, was zu den aus der Lichtblattmikroskopie bekannten Streu- und Abschattungsartefakten führt.

Optische Systeme für Lichtblattmikroskope nach dem Oberbegriff das Anspruchs 1 sind aus den Druckschriften DE 102016103182 A2, DE102018204940 A1 und DE102014102215 A1 bekannt.

Aus den Druckschriften DE3615842A1 und US2005/128573A1 sind Mikroskopsysteme bekannt, die jeweils in einem Beobachtungsstrahlengang ein Wechselsystem mit zwei Lichtumlenkelementen aufweisen, von denen ein erstes Lichtumlenkelement eine Bildumkehr in nur einer Richtung und ein zweites Lichtumlenkelement eine vollständige Bildumkehr in zwei Richtungen bewirkt.

In der konventionellen Lichtblattmikroskopie sind Drehvorrichtungen bekannt, oder aber auch Aufbauten, die eine Detektion aus mehreren Richtungen zulassen, wie z. B. aus U. Krzic et al., Nature Methods, Volume 9, Seiten 730 - 733 (2012) bekannt ist. In der Schiefebenenmikroskopie sind in US 8 582 203 B2 und DE 10 2016 103 182 B4 Aufbauten mit Bildfeldrotationssystemen wie Abbe-König-Rotatoren beschrieben.

Ein entscheidender Vorteil der Schiefebenemikroskopie ist die Kompatibilität mit konventionellen Probenformaten. Durch mehrseitige Aufbauen, die als "Multiview Lightsheet" bekannt sind, ist eine optische Zugänglichkeit der Probe auch aus der Gegenrichtung notwendig. Dies ist jedoch mit konventionellen Probeformaten wie Petrischalen oder Multititerplatten inkompatibel. Auch Aufbauten, wie aus Wu et al., Nature Biotechnology, Volume 31, Seiten 1032-1038 (2013) bekannt sind, eignen sich nicht für die Untersuchung in Multititerplatten und benötigen eine Doppelung der Strahlengänge, was kostenintensiv ist.

Die Verwendung von Bildfeldrotationssystemen ist aus praktischen Gründen ungünstig: Durch die endlichen Toleranzen der Lager sowie der Prismenflächen ist es in der Praxis nur schwer möglich, die engen Toleranzen der Zentrierung der Pupillenabbildung zu gewährleisten, die aufgrund des "Remote Focusing", auf dem die Schiefebenenmikroskopie beruht, einzuhalten sind.

Es ist die Aufgabe der Erfindung, ein optisches System und ein Verfahren anzugeben, die ein einfaches Umschalten der Beleuchtungsrichtung und der Detektionsrichtung in einem Lichtblattmikroskop erlauben.

### Kurzdarstellung

Diese Aufgabe wird durch das optische System mit den Merkmalen des Anspruchs 1 und das Verfahren mit den Merkmalen des Anspruchs 14 gelöst. Vorteilhafte Weiterbildungen sind jeweils in den abhängigen Ansprüchen angegeben.

Das optische System für ein Lichtblattmikroskop nach Anspruch 1 hat eine Transportoptik, die ausgebildet ist, ein Lichtblatt zum Beleuchten einer schräg zur optischen Achse der Transportoptik liegenden Probenebenen in eine Probe abzubilden und die beleuchtete Probenebene in einen Zwischenbildraum abzubilden. Die Transportoptik umfasst ein Wechselsystem, das mindestens ein erstes und ein zweites Lichtumlenkelement hat. Die Transportoptik ist ferner ausgebildet, eine Beleuchtungsrichtung, längs der das Lichtblatt die Probe beleuchtet, umzuschalten, indem das erste und das zweite Lichtumlenkelement abwechselnd in einen Strahlengang der Transportoptik eingebracht werden. Das erste Lichtumlenkelement bewirkt eine teilweise Bildumkehr in nur einer Richtung und das zweite Lichtumlenkelement bewirkt eine vollständige Bildumkehr in zwei Richtungen.

Die Transportoptik bildet das Lichtblatt in die Probe ab. Das Lichtblatt verläuft dabei mit einem Parallelversatz zur optischen Achse der Transportoptik. Hierdurch wird das Lichtblatt in einen Teilbereich einer Eintrittspupille eines der Probe zugewandten Objektivs geleitet, der gegenüber der Mitte der Eintrittspupille seitlich versetzt ist. Die Eintrittspupille des Objektivs wird somit dezentral unterleuchtet, was dazu führt, dass das Lichtblatt schräg zur optischen Achse in die Probe gelenkt wird. Aus diesem Grund wird ein derartiges Lichtblattmikroskop auch als Schiefebenenmikroskop bezeichnet.

Das Einbringen des ersten Lichtumlenkelementes bewirkt eine erste Bildumkehr, beispielsweise ein Vertauschen von oben und unten in dem Strahlengang der Transportoptik vor dem Objektiv. Das Einbringen des zweiten Lichtumlenkelementes bewirkt nun gleichsam ein zusätzliches Vertauschen von links und rechts in dem Strahlengang der Transportoptik vor dem Objektiv. Wird also das zweite Lichtumlenkelement in den Strahlengang der Transportoptik eingebracht, so wird das Lichtblatt in einen anderen Teilbereich der Eintrittspupille des der Probe zugewandten Objektivs geleitet. Dies führt wiederum dazu, dass das Lichtblatt aus einer anderen Richtung schräg zur optischen Achse in die Probe gelenkt wird. Durch das Einbringen des zweiten Lichtumlenkelementes wird folglich ein Umschalten der Beleuchtungsrichtung erreicht.

In inversen Mikroskopieanordnungen, die auch als Schiefebenenmikroskop ausgeführt sein können, befindet sich das Objektiv unterhalb des Probetisches. Um das Mikroskopsystem nicht zu hoch werden zu lassen, wird der Abbildungsstrahlengang üblicherweise durch ein Umlenkelement (z. B. einen Spiegel) zur Seite umgelenkt.

In einem Schiefebenenmikroskop befindet sich im Detektionsstrahlengang eine Bildaufrichtungseinheit, die durch zwei sich gegenüberstehende und zueinander verkippte Objektive realisiert ist. Um diese Anordnung mit geringem Aufwand und möglichst stabil aufzubauen, wird die Knickachse üblicherweise durch die Gravitationsachse gegeben. Die Knickachse ist also parallel zur optischen Achse des probenseitigen Objektivs in einem inversen Mikroskopsystem. Dadurch bleibt im liegenden optischen Strahlengang zwischen Umlenkung und Bildaufrichtungseinheit eine Spiegelsymmetrie bzgl. oben/unten erhalten, nicht jedoch bzgl. rechts/links.

Um nun die Beleuchtungsrichtung und die Detektionsrichtung des Schiefebenenmikroskops umschalten zu können, ist eine Vertauschung der beiden Seiten rechts/links im liegenden Strahlengang nötig. Dies kann durch zwei austauschbare Spiegelanordnungen geschehen, die rechts/links ablenken, je eine gerade und eine ungerade Anzahl von Spiegelungen bewirken und eine gemeinsame Lage von Eintritts- und Austrittsachse sowie eine gleiche optische Weglänge durch beide Spiegelanordnungen aufweisen. Diese Lösung hat gegenüber Bildfeldrotatoren wie z. B. einem Abbe-König-Rotator oder einem Schmidt-Pechan-Rotator den Vorteil, dass beide Spiegelanordnungen separat justiert werden können und damit die Zentrierung von Pupillen- und Feldabbildung sichergestellt werden kann. Ihr Nachteil liegt jedoch darin, dass zusätzliche Umlenkelemente zu verbauen sind, die aufgrund der endlichen Reflektivität und Oberflächenqualität sowie ihrer Kosten sowohl auf die Abbildungsgüte als auch auf die Wirtschaftlichkeit des Mikroskopsystems negative Auswirkungen haben.

Erfindungsgemäß wird eine Vertauschung der asymmetrischen Richtung sowohl von Bildfeld als auch von Pupille durch eine Modifikation des oben erwähnten Umlenkelementes erreicht, das aus dem vertikalen einen horizontalen Strahlengang macht. Dies kann durch Ersetzen eines einfachen Umlenkelementes mit einer reflektierenden Fläche durch ein Umlenkelement mit einer Dachkante mittels eines Wechselmechanismus erreicht werden. Da es sich auch hierbei um zwei einzelne Elemente handelt, können diese, im Gegensatz zu einem Bildfeldrotationssystem, unabhängig voneinander justiert und so Pupillen- und Feldabbildung zentriert werden. Durch Positionierung der Dachkante auf einer Fläche, die der spiegelnden Fläche des Umlenkelements ohne Dachkante entspricht, ist auch eine Gleichheit der optischen Weglängen gegeben. Beispielhaft könnte solch ein Paar von Umlenkelementen aus einem Umlenkprisma mit Rückseitenspiegel (oder Totalreflexion) und einem Amici-Dachkant-Prisma bestehen, oder aber aus einem einfachen Vorderflächenspiegel und einem Dachkantspiegel, der aus zwei Einzelelementen gefertigt werden kann, um eine Innendachkante herzustellen. Bei der Verwendung von Rückseitenspiegeln können die Prismen auch so gekippt sein, dass die Eintritts- und Austrittsflächen nicht senkrecht zur optischen Achse stehen, um Reflexe zu vermeiden.

In einer bevorzugten Ausführungsform wird das Lichtblatt in dem Zwischenbildraum erzeugt. Alternativ kann das Lichtblatt auch, beispielsweise mittels eines Strahlteilerelementes, in die Transportoptik eingekoppelt werden.

In einer erfindungsgemäßen Ausführungsform umfasst das optische System eine Detektionsoptik, deren optische Achse gegenüber der optischen Achse der Transportoptik um eine Kippachse verkippt ist, die durch den Zwischenbildraum verläuft. In dieser Ausführungsform bildet die Detektionsoptik die von der Transportoptik in den Zwischenbildraum abgebildeten Probenebenen beispielsweise auf einen Bildsensor ab. Die Detektionsoptik ist dabei vorzugsweise derart angeordnet, dass die in den Zwischenbildraum abgebildeten Probenebenen senkrecht auf der optischen Achse der Detektionsoptik stehen.

In einer weiteren bevorzugten Ausführungsform umfasst das optische System eine Abtastvorrichtung zum schrittweisen Beleuchten mehrerer längs einer Abtastrichtung aufeinanderfolgender Probenebenen mit dem Lichtblatt. Die Detektionsoptik ist ferner ausgebildet, jeweils ein Schichtbild aus einem in dem Zwischenbildraum erzeugten Bild der jeweiligen Probenebene zu erzeugen. Aus den Schichtbildern kann jeweils ein Schichtbildstapel zusammengesetzt werden, der zu einem Volumenbild, d.h. einer dreidimensionalen Abbildung der Probe weiterverarbeitet werden kann. Dies erlaubt eine Erzeugung hochaufgelöster Volumenbilder von Bereichen der Probe.

In einer bevorzugten Ausführungsform umfasst die Abtastvorrichtung mindestens einen Rasterspiegel, durch welchen das Lichtblatt quer zur optischen Achse der Transportoptik bewegbar ist. Vorzugsweise ist der Rasterspiegel in einem Unendlichstrahlengang der Transportoptik angeordnet, d.h. an einem Ort entlang des Strahlengangs der Transportoptik, an dem die Strahlen weitestgehend parallel sind. Dies ist eine mechanisch einfache Ausgestaltung der Abtastvorrichtung.

In einer hierzu alternativen Ausführungsform umfasst die Abtastvorrichtung mindestens eine Fokussiereinrichtung zum Einstellen einer Schärfeebene der Transportoptik umfasst. Bei dieser Fokussiereinrichtung kann es sich insbesondere um ein dem Zwischenbildraum zugewandtes Objektiv der Transportoptik handeln. Da hier, anders als bei der Verwendung eines Rasterspiegels, kein Unendlichstrahlengang innerhalb des Strahlengangs der Transportoptik erforderlich ist, kommt diese alternative Ausführungsform mit weniger optischen Elementen im Strahlengang der Transportoptik aus. Entsprechend kann diese Ausführungsform kompakter ausgebildet werden.

In einer bevorzugten Ausführungsform umfasst das optische System eine Bildverarbeitungs- und Steuereinheit, die ausgebildet ist, das erste Lichtumlenkelement in den Strahlengang der Transportoptik einzubringen, einen ersten Bilddatensatz zu erzeugen, der einen aus den Schichtbildern zusammengesetzten Schichtbildstapel darstellt, das zweite Lichtumlenkelement in den Strahlengang der Transportoptik einzubringen, einen zweiten Bilddatensatz zu erzeugen, der einen weiteren aus den Schichtbildern zusammengesetzten Schichtbildstapel darstellt, und den ersten Bilddatensatz und den zweiten Bilddatensatz zu einem Volumenbild der Probe zu verarbeiten. Hierbei werden nun Volumenbilder der Probe mit beiden Umlenkelementen aufgenommen, also jeweils bei Kippung der Detektionsebene um +α und um -α relativ zur optischen Achse, mit unverändertem Azimut. Nachfolgend werden beide Volumenbilder in eine gemeinsame Geometrie transformiert, z. B. mit Hilfe eines Verfahrens wie es in DE 10 2017 116 380 B3 beschrieben ist. Verfahren zur Registrierung und Verrechnung entsprechender Bilddatensätze sind z. B. aus Swoger et al., Optics Express, Vol. 15, Issue 13, pp. 8029-8042 (2007) bekannt.

In einer weiteren bevorzugten Ausführungsform hat die Transportoptik ein einziges der Probe zugewandtes Objektiv, dessen optische Achse parallel zu der Kippachse ist. Das einzige Objektiv dient gleichzeitig zur Beleuchtung der Probe mittels des Lichtblattes und der Detektion der beleuchteten Probenebenen. Die Ausführungsform mit nur einem einzigen der Probe zugewandten Objektiv hat gegenüber alternativen Ausgestaltungen mit separaten Objektiven für Beleuchtung und Detektion den Vorteil, dass die optischen Achsen des Objektivs senkrecht zu einem Probenträger ausgerichtet werden kann. Hierdurch werden insbesondere Reflektionen an der Oberfläche des Probenträger vermindert und die Bildqualität des optischen Systems erhöht.

In einer weiteren bevorzugten Ausführungsform lenken das erste Lichtumlenkelement und das zweite Lichtumlenkelement den Strahlengang der Transportoptik jeweils um 90° ab. In dieser Ausführungsform ist das optische System insbesondere für solche Lichtblattmikroskope geeignet, die als inverse Mikroskope ausgeführt sind. Die optische Achse des der Probe zugewandten Objektivs ist parallel zur Richtung der Gravitation ausgerichtet. Demgegenüber liegen die optischen Achsen der Transportoptik und der Detektionsoptik, die sich in dem Zwischenbildraum schneiden, in einer Ebene, die senkrecht zur Richtung der Gravitation ist. Diese Anordnung ist besonders stabil und einfach anzuordnen.

Vorzugsweise ist das erste Lichtumlenkelement ein Umlenkspiegel oder ein Umlenkprisma. Das zweite Lichtumlenkelement ist vorzugsweise ein Dachkantprisma, ein Dachkantspiegel oder ein Amici-Prisma. Die Verwendung von Prismen als optische Elemente erlauben eine einfache Justage des optischen Systems. Spiegelanordnungen sind kostengünstiger.

Vorzugsweise bewirkt das zweite Lichtumlenkelement eine Bilddrehung um 90°, 180° oder 270°. Insbesondere können auch weitere Lichtumlenkelemente vorgesehen werden, die jeweils unterschiedliche Bilddrehungen realisieren. Hierdurch kann mittels des Wechselsystem zwischen mehr als zwei Beleuchtungsrichtungen und Detektionsrichtungen umgeschaltet werden.

In einer bevorzugten Ausführungsform umfasst das optische System eine Beleuchtungseinheit zum Erzeugen des Lichtblattes. Vorzugsweise ist die Beleuchtungseinheit derart angeordnet, dass die optische Achse der Beleuchtungseinheit senkrecht zur optischen Achse der Detektionsoptik liegt. Insbesondere schneiden sich die optischen Achsen der Transportoptik, der Beleuchtungseinheit und der Detektionsoptik in dem Zwischenbildraum.

Die Erfindung betrifft außerdem ein Lichtblattmikroskop mit einem optischen System oben beschriebener Art. Das Lichtblattmikroskop ist insbesondere als inverses Mikroskop ausgeführt.

Die Erfindung betrifft ferner ein Verfahren zum Beleuchten einer Probe in einem Lichtblattmikroskop. Bei dem Verfahren werden mittels einer Transportoptik ein Lichtblatt zum Beleuchten einer schräg zur optischen Achse der Transportoptik liegenden Probenebenen in eine Probe abgebildet und die beleuchtete Probenebene in einen Zwischenbildraum abgebildet. Es wird eine Beleuchtungsrichtung, längs der das Lichtblatt die Probe beleuchtet, umgeschaltet, indem ein erstes und ein zweites Lichtumlenkelement abwechselnd in einen Strahlengang der Transportoptik eingebracht werden. Das erste Lichtumlenkelement bewirkt dabei eine teilweise Bildumkehr in nur einer Richtung, und das zweite Lichtumlenkelement bewirkt eine vollständige Bildumkehr in zwei Richtungen.

Das Verfahren hat die vorstehend beschriebenen Vorteile und kann auf die gleiche Weise, insbesondere durch die auf das Lichtblattmikroskop bezogenen Merkmale der abhängigen Ansprüche, weitergebildet werden.

### Kurzbeschreibung der Figuren

Weitere Merkmale und Vorteile ergeben sich aus der folgenden Beschreibung, die mehrere Ausführungsformen in Verbindung mit den beigefügten Figuren näher erläutert.

Es zeigen
- Figur 1: eine schematische Darstellung eines Lichtblattmikroskops mit einer Abtastvorrichtung;
- Figur 2: eine schematische Darstellung eines Lichtblattmikroskops mit einer alternativen Einkopplung der Beleuchtung;
- Figur 3: ein Schiefebenenmikroskop mit einer alternativen Abtastvorrichtung;
- Figur 4: eine schematische Darstellung eines Teils des optischen Systems der Lichtblattmikroskope gemäß den Figuren 1 und 2;
- Figur 5: eine weitere schematische Darstellung eines Teils des optischen Systems der Lichtblattmikroskope gemäß den Figuren 1 und 2;
- Figur 6: eine schematische Darstellung eines Teils des optischen Systems des Lichtblattmikroskops gemäß der Figur 3;
- Figur 7: eine weitere schematische Darstellung eines Teils des optischen Systems des Lichtblattmikroskops gemäß der Figur 3; und
- Figur 8: ein beispielhaftes Verfahren zum Erzeugen eines Volumenbildes einer Probe.

### Detaillierte Beschreibung

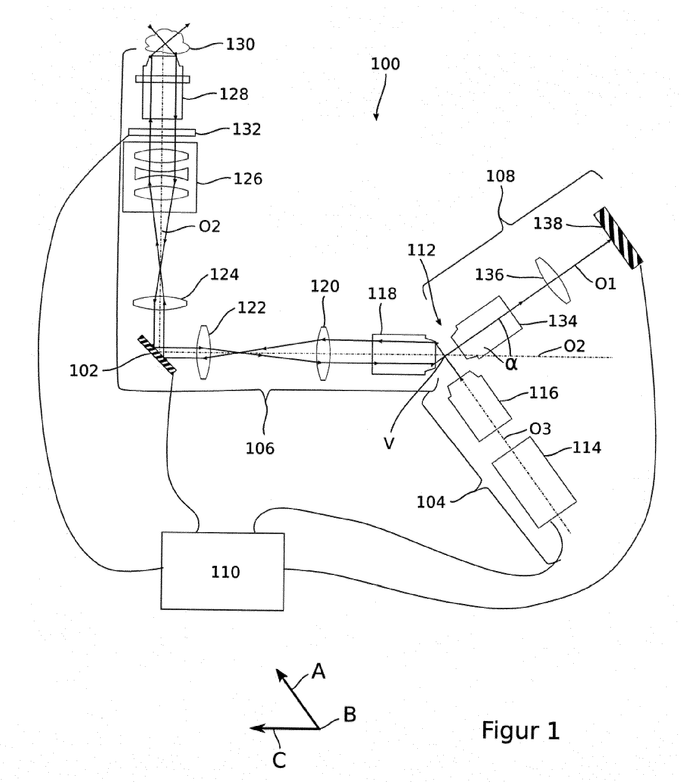

Figur 1 zeigt eine schematische Darstellung eines Lichtblattmikroskops 100 mit einer Abtastvorrichtung 102 gemäß einer Ausführungsform.

Das Lichtblattmikroskop 100 umfasst die Abtastvorrichtung 102, eine Beleuchtungseinheit 104, eine Transportoptik 106, eine Detektionsoptik 108 und einen Prozessor 110. Die vorgenannten Elemente bilden gemeinsam ein Ausführungsbeispiel eines erfindungsgemäßen optischen Systems.

Die optische Achse O1 der Detektionsoptik 108 ist gegenüber der optischen Achse O2 der Transportoptik 106 um einen Kippwinkel α verkippt. In dem in Figur 1 gezeigten Ausführungsbeispiel liegt die Achse V dieser Verkippung parallel zur Richtung der Gravitation, d.h. senkrecht zur Zeichenebene der Figur 1. Auch die optische Achse O3 der Beleuchtungseinheit 104 ist gegenüber der optischen Achse O2 der Transportoptik 106 um die Kippachse V verkippt. Die optische Achse O3 der Beleuchtungseinheit 104 steht dabei senkrecht auf der optischen Achse O1 der Detektionsoptik 108, so dass die optische Achse O3 der Beleuchtungseinheit 104 gegenüber der optischen Achse O2 der Transportoptik 106 um einen Winkel 90° - α verkippt ist. Die drei vorgenannten optischen Achsen O1, O2, O3 schneiden sich in einem Zwischenbildraum 112.

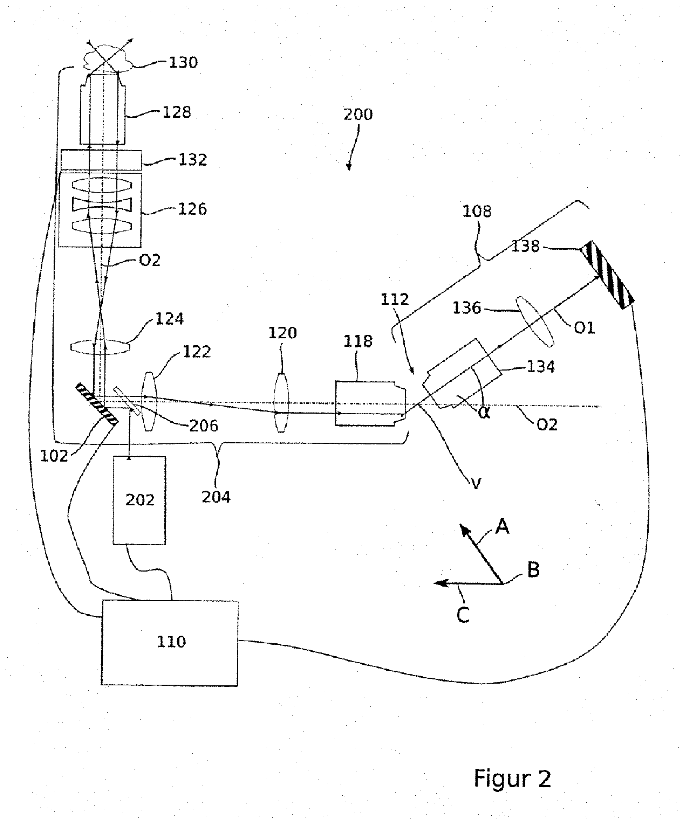

Die Beleuchtungseinheit 104 umfasst eine Lichtquelle 114 und ein Beleuchtungsobjektiv 116. Die Lichtquelle 114 erzeugt ein Lichtblatt, beispielsweise mit Hilfe einer in Figur 1 nicht explizit gezeigten Zylinderlinse, wobei sich das Lichtblatt unter Bezugnahme auf ein in Figur 1 dargestelltes schiefwinkliges Koordinatensystem in einer Beleuchtungsrichtung A und einer hierzu senkrechten Ausdehnungsrichtung B erstreckt. In dem gezeigten Ausführungsbeispiel ist die Ausdehnungsrichtung B parallel zur Kippachse V, d.h. die Ausdehnungsrichtung B zeigt in der Darstellung nach Figur 1 aus der Zeichenebene heraus. Alternativ kann die Lichtquelle 114 mittels eines eigens hierfür vorgesehenen Abtastelements auch ein quasistatisches Lichtblatt erzeugen. Das Beleuchtungsobjektiv 116 bildet das Lichtblatt in den Zwischenbildraum 112 ab. Alternativ kann das Lichtblatt auch direkt in die Transportoptik 106 eingekoppelt werden. Eine solche alternative Ausführungsform ist weiter unten anhand von Figur 2 beschrieben.

Die Transportoptik 106 umfasst vom Zwischenbildraum 112 her gesehen ein dem Zwischenbildraum 112 zugewandtes Projektionsobjektiv 118, eine erste Tubuslinse 120, ein erstes Okular 122, ein zweites Okular 124, eine zweite Tubuslinse 126, die in dem gezeigten Ausführungsbeispiel als ein mehrere Linsen enthaltendes Linsensystem ausgebildet ist, und ein weiteres Objektiv 128, das einer Probe 130 zugewandt ist. Zwischen dem ersten Okular 122 und dem zweiten Okular 124 ist die Abtastvorrichtung 102 angeordnet, die in der gezeigten Ausführungsform durch einen Rasterspiegel gebildet ist, an dem die optische Achse O2 der Transportoptik 106 umgelenkt wird. Mit Hilfe des beweglichen Rasterspiegels kann das Lichtblatt längs einer Abtastrichtung C, die senkrecht zur optischen Achse O2 der Transportoptik 106 liegt, bewegt werden.

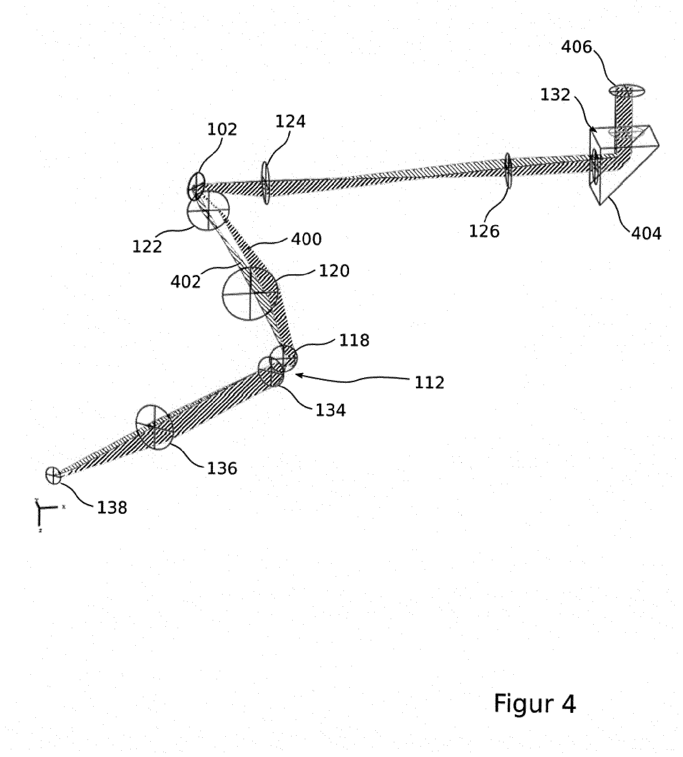

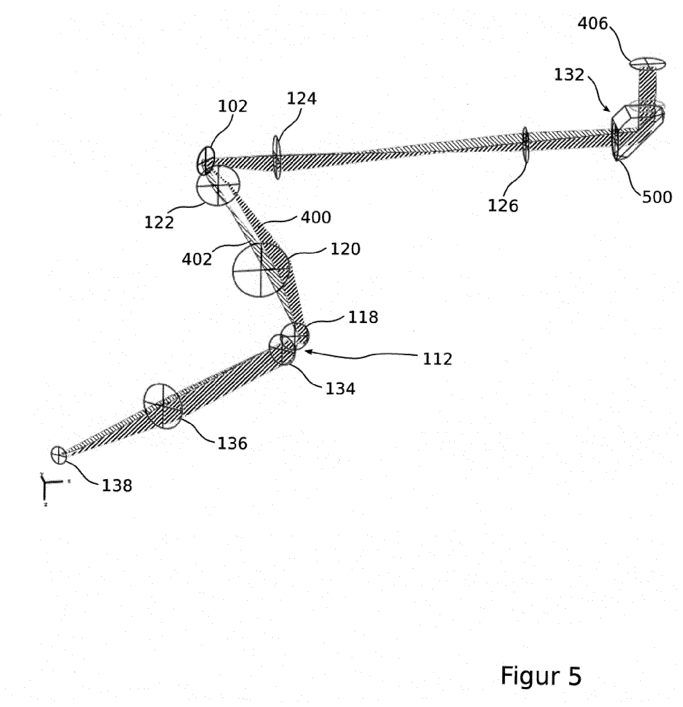

Zur zeichnerischen Vereinfachung ist in Figur 1 das der Probe zugewandte Objektiv 128 so dargestellt, als würde es wie die übrigen Komponenten der Transportoptik 106 in der Zeichenebene der Figur 1 liegen. Tatsächlich ist es jedoch ist es jedoch senkrecht zur Zeichenebene ausgerichtet, wie sich auch aus den Figuren 4 und 5 ergibt.

Zwischen der zweiten Tubuslinse 126 und dem Objektiv 128 ist ein Wechselsystem 132 angeordnet und ausgebildet, wahlweise ein erstes Lichtumlenkelement 404 und ein zweites Lichtumlenkelement 500 (vgl. Figuren 4 und 5) in den Strahlengang der Transportoptik 106 einzubringen. Sowohl das erste Lichtumlenkelement 404 als auch das zweite Lichtumlenkelement 500 bewirken eine Umlenkung der optischen Achse O2 der Transportoptik 106 um 90° aus der Zeichenebene von Figur 1 heraus, was in den Figuren 4 und 5 gezeigt ist. Diese Umlenkung bewirkt eine Achsenspiegelung des virtuellen Bildes an dieser Stelle der Transportoptik 106 entlang einer Achse, die senkrecht zur optischen Achse O2 der Transportoptik 106 und senkrecht zur Richtung der Gravitation ist. Diese Achsenspiegelung bewirkt gleichsam ein Vertauschen von oben und unten in dem virtuellen Bild und wird im Folgenden auch als erste Bildumkehr bezeichnet. Das zweite Lichtumlenkelement 500 bewirkt zusätzlich eine zweite Achsenspiegelung entlang einer Achse, die senkrecht zur optischen Achse O2 der Transportoptik 106 und parallel zur Richtung der Gravitation ist. Die zweite Achsenspiegelung bewirkt gleichsam ein Vertauschen von links und rechts in dem virtuellen Bild und wird im Folgenden auch als zweite Bildumkehr bezeichnet.

Die Transportoptik 106 bildet das Lichtblatt aus dem Zwischenbildraum 112 in die Probe 130 ab. Das Beleuchtungslicht, welches das Lichtblatt erzeugt, verläuft dabei mit einem Parallelversatz zur optischen Achse O2 der Transportoptik 106. Hierdurch wird das Lichtblatt in einen Teilbereich einer Eintrittspupille 406 (siehe Figuren 4 und 5) des Objektivs 128 geleitet, der gegenüber der optischen Achse O2 der Transportoptik 106 und damit gegenüber der Mitte der Eintrittspupille 406 seitlich versetzt ist (in Figur 1 links der optischen Achse der Transportoptik 106). Die Eintrittspupille 406 des Objektivs 128 wird somit dezentral unterleuchtet, was dazu führt, dass das Lichtblatt schräg zur optischen Achse O2 des Objektivs 128 in die Probe 130 gelenkt wird.

Das Einbringen des zweiten Lichtumlenkelementes 500 bewirkt ein Vertauschen von links und rechts in dem Strahlengang der Transportoptik 106 vor dem Objektiv 128. Wird also das zweite Lichtumlenkelement 500 in den Strahlengang der Transportoptik 106 eingebracht, so wird das Lichtblatt in einen anderen Teilbereich der Eintrittspupille 406 des Objektivs 128 geleitet, der in Figur 1 rechts der optischen Achse O2 der Transportoptik 106 liegt. Dies führt wiederum dazu, dass das Lichtblatt aus einer anderen Richtung schräg zur optischen Achse des Objektivs 128 in die Probe 130 gelenkt wird.

Durch das Einbringen des zweiten Lichtumlenkelementes 500 wird folglich ein Umschalten der Beleuchtungsrichtung erreicht.

Die Detektionsoptik 108 umfasst von dem Zwischenbildraum 112 her gesehen ein Detektionsobjektiv 134, eine Tubuslinse 136 und einen Bildsensor 138. Von der Probe 130 ausgehendes Detektionslicht, das von der Transportoptik 106 in den Zwischenbildraum 112 transportiert wird, wird durch das Detektionsobjektiv 134 und die Tubuslinse 136 auf den Bildsensor 138 geleitet.

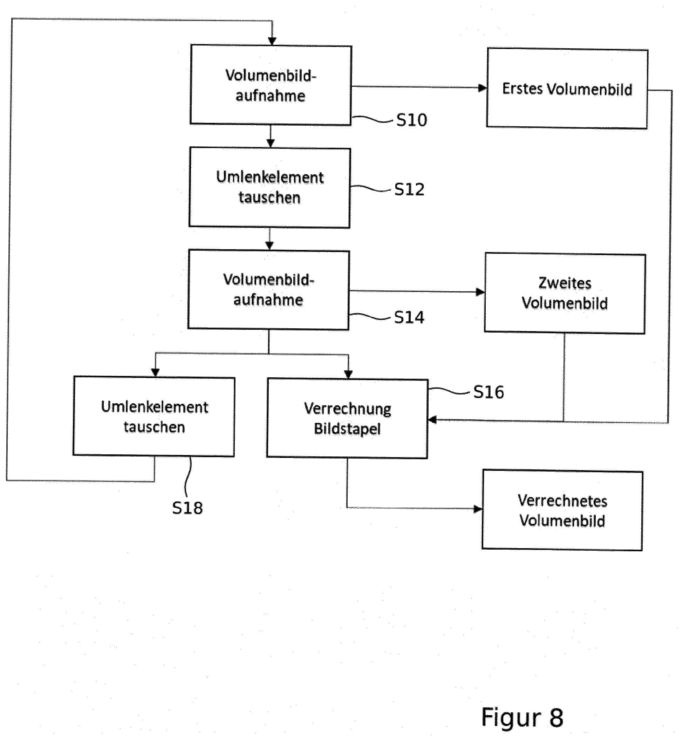

Der Prozessor 110 ist mit dem Wechselsystem 132, der Lichtquelle 114, der Abtastvorrichtung 102 und dem Bildsensor 138 verbunden. Der Prozessor 110 ist ausgebildet, die mit ihm gekoppelten Elemente zu steuern und durch den Bildsensor 138 erzeugte Bilddaten zu verarbeiten , um ein Volumenbild der Probe 130 zu erzeugen. Diese Bilderzeugung wird anhand von Figur 8 später noch näher beschrieben. Der Prozessor 110 bildet somit eine Bildverarbeitungs- und Steuereinheit des Lichtblattmikroskops 100.

Figur 2 zeigt eine schematische Darstellung eines Lichtblattmikroskops 200 gemäß einer weiteren Ausführungsform. Das Lichtblattmikroskop 200 gemäß Figur 2 unterscheidet sich von dem Lichtblattmikroskop 100 gemäß Figur 1 in der Anordnung der Beleuchtungseinheit 202 und damit in der Art und Weise, wie das Lichtblatt in die Transportoptik 204 eingekoppelt wird. Gleiche und gleichwirkende Elemente sind in den Figuren 1 und 2 mit den gleichen Bezugszeichen bezeichnet.

Die Transportoptik 204 des Lichtblattmikroskops 200 nach Figur 2 umfasst ein Strahlteilerelement 206, das in dem gezeigten Ausführungsbeispiel als dichroitischer Strahlteiler ausgeführt ist. Das Strahlteilerelement 206 ist zwischen dem ersten Okular 122 und dem Rasterspiegel der Abtastvorrichtung 102 in dem Strahlengang der Transportoptik 204 angeordnet. Die Beleuchtungseinheit 202 ist in Figur 2 unterhalb des Strahlteilerelementes 206 angeordnet und zur zeichnerischen Vereinfachung als einziger Block dargestellt. Durch das Strahlteilerelement 206 wird das von der Beleuchtungseinheit 202 erzeugte Lichtblatt in den Strahlengang der Transportoptik 204 eingekoppelt. Anders als in dem Lichtblattmikroskop 100 nach Figur 1 wird das Lichtblatt in dem Lichtblattmikroskop 200 nach Figur 2 also nicht in dem Zwischenbildraum 112 erzeugt.

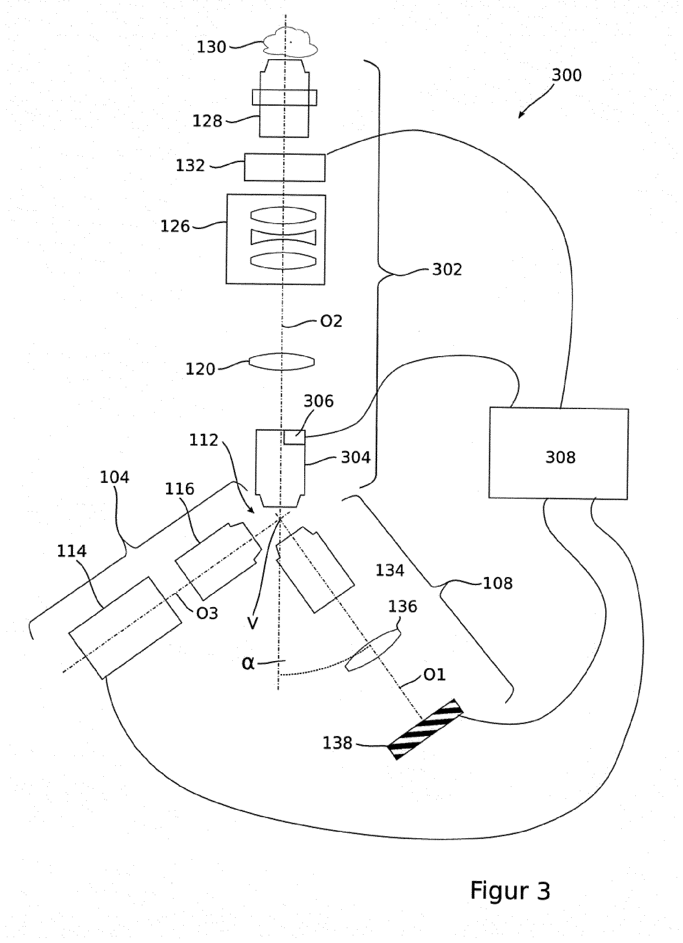

Figur 3 zeigt eine schematische Darstellung eines Lichtblattmikroskops 300 gemäß einer weiteren Ausführungsform. Das Lichtblattmikroskop 300 gemäß Figur 3 unterscheidet sich von den in den Figuren 1 und 2 gezeigten Lichtblattmikroskopen 100, 200 im Wesentlichen dadurch, dass die Abtastung durch das Lichtblatt axial, d.h. längs der optischen Achse O2 der Transportoptik 302 erfolgt. Gleiche und gleichwirkende Elemente sind in den Figuren 1 bis 3 mit den gleichen Bezugszeichen bezeichnet.

In der in Figur 3 gezeigten Ausführungsform umfasst die Transportoptik 302 von dem Zwischenbildraum 112 her gesehen ein Projektionsobjektiv 304, die beiden Tubuslinsen 120, 126 sowie das der Probe 130 zugewandte Objektiv 128. Das Projektionsobjektiv 304 weist eine elektronische Fokussiereinrichtung 306 auf, die ausgebildet ist, das Lichtblatt auf verschiedene Ebenen in der Probe 130 zu fokussieren. Die elektronische Fokussiereinrichtung 306 ist mit dem Prozessor 308 verbunden.

In der Ausführungsform nach Figur 3 ist die Abtastvorrichtung durch die elektronische Fokussiereinrichtung 306 gebildet. Durch die elektronische Fokussiereinrichtung 304 sind das Lichtblatt und gleichzeitig die dazu koplanare Detektionsebene längs der optischen Achse O2 der Transportoptik 302 bewegbar.

Die Figuren 4 und 5 zeigen jeweils eine schematische Darstellung eines Teils des optischen Systems der Lichtblattmikroskope 100, 200 gemäß den Figuren 1 und 2. Der Übersicht halber sind die Beleuchtungseinheit 104, 202 und das Strahlteilerelement 206 in den Figuren 4 und 5 jeweils weggelassen. In den Figuren 4 und 5 sind Lichtbündel 400, 402 achsferner und achsnaher Strahlen durch unterschiedliche Schraffur dargestellt. Das Lichtbündel 400 achsferner Strahlen entspricht dabei dem Lichtblatt, das ja gerade mit Parallelversatz zur optischen Achse O2 der Transportoptik 106, 204 erzeugt wird.

In Figur 4 ist ein Betriebszustand gezeigt, in dem durch das Wechselsystem 132 das erste Lichtumlenkelement 404 in den Strahlengang der Transportoptik 106, 204 eingebracht ist. Das erste Lichtumlenkelement 404 ist beispielhaft als Prisma ausgebildet. Das erste Lichtumlenkelement 404 bewirkt die erste Bildumkehr, d.h. das Umlenken der optischen Achse O2 der Transportoptik 106, 204 um 90° in Richtung der Eintrittspupille 406 des Objektivs 128. In Figur 4 ist deutlich zu erkennen, dass der Parallelversatz des Lichtblattes gegenüber der optischen Achse O2 der Transportoptik 106, 204 dazu führt, dass das Lichtblatt gegenüber der Mitte der Eintrittspupille 406 des Objektivs 128 seitlich versetzt in die Eintrittspupille 406 eintritt. In dem Beispiel nach Figur 4 tritt das Lichtblatt von der Transportoptik 106, 204 her gesehen links der Mitte in die Eintrittspupille 406 des Objektivs 128 ein.

In Figur 5 ist ein Betriebszustand gezeigt, in dem durch das Wechselsystem 132 das zweite Lichtumlenkelement 500 in den Strahlengang der Transportoptik 106 eingebracht Das zweite Lichtumlenkelement 500 ist beispielhaft als Amici-Dachkant-Prisma ausgebildet. Das zweite Lichtumlenkelement 500 bewirkt sowohl die erste Bildumkehr als auch die zweite Bildumkehr, d.h. das Vertauschen von links und rechts in dem virtuellen Bild. Dieses Vertauschen führt dazu, dass das Lichtblatt in dem Betriebszustand nach Figur 5 in einen anderen Teilbereich der Eintrittspupille 406 des Objektivs 128 eintritt, als in dem Betriebszustand nach Figur 4, in dem das erste Lichtumlenkelement 404 in den Strahlengang der Transportoptik 106, 204 eingebracht ist. In dem Besipiel nach Figur 5 tritt das Lichtblatt von der Transportoptik 106, 204 her gesehen rechts der Mitte in die Eintrittspupille 406 des Objektivs 128 ein.

In der Zusammenschau der Figuren 4 und 5 ist zu sehen, wie mit Hilfe des Wechselsystems 132 gesteuert werden kann, in welchen Teilbereich der Eintrittspupille 406 des Objektivs 128 das Lichtblatt eintritt. Das Objektiv 128 bewirkt in beiden Fällen eine Ablenkung des Lichtblatts in Richtung der optischen Achse des Objektivs 128. Folglich kann mittels des Wechselsystems 132 durch wahlweises Einbringen eines der beiden Lichtumlenkelemente 404, 500 bestimmt werden, aus welcher Richtung die Probe 130 mit dem Lichtblatt beleuchtet wird.

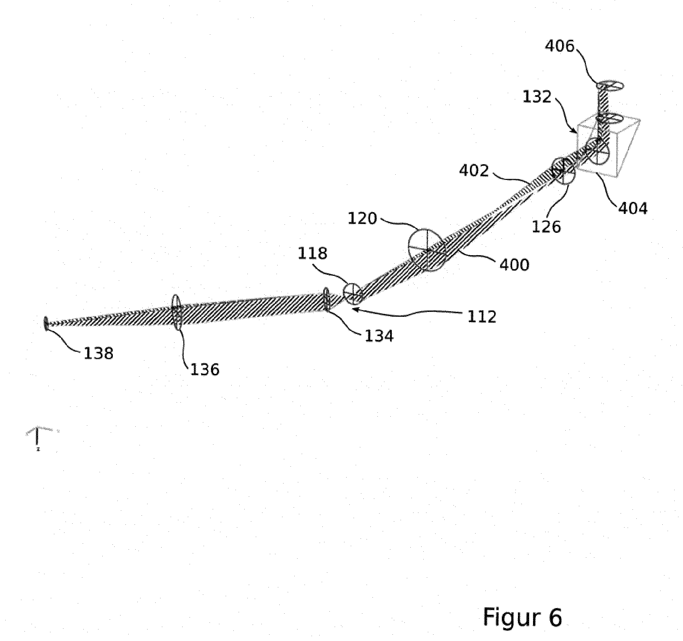

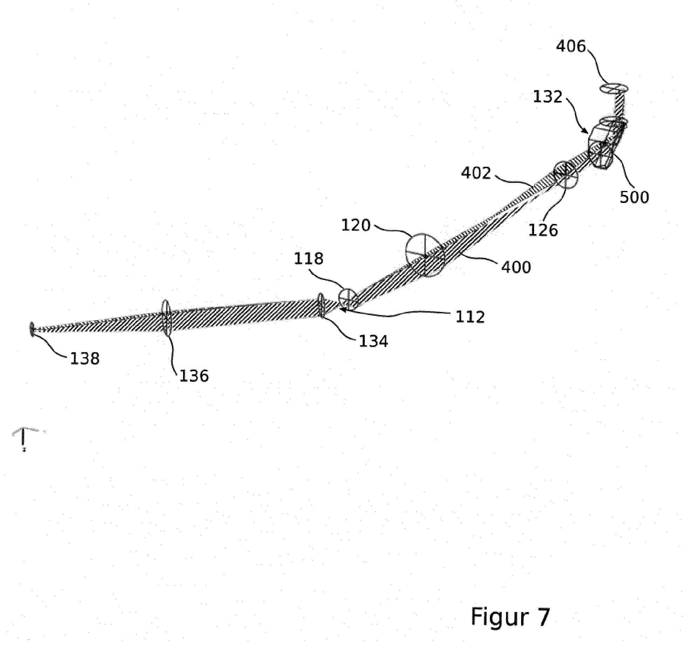

Die Figuren 6 und 7 zeigen jeweils eine schematische Darstellung eines Teils des optischen Systems des Lichtblattmikroskops 300 gemäß Figur 3. Der Übersicht halber ist die Beleuchtungseinheit 104 in den Figuren 6 und 7 jeweils weggelassen. In den Figuren 6 und 7 sind Lichtbündel achsferner und achsnaher Strahlen 400, 402 durch unterschiedliche Schraffur dargestellt. Das Lichtbündel 400 achsferner Strahlen entspricht dabei wiederum dem Lichtblatt. Im Gegensatz zu dem optischen System gemäß den Figuren 4 und 6 weist das in den Figuren 6 und 7 gezeigte optische System keinen Rasterspiegel auf. Hierdurch kann auf die beiden Okulare 122, 124 verzichtet werden.

Figur 8 zeigt den Ablaufplan eines beispielhaften Verfahrens zum Erzeugen eines Volumenbildes der Probe 130 mittels des Lichtblattmikroskops gemäß einer der Figuren 1 bis 3.

In Schritt S10 wird ein erstes Volumenbild erzeugt. Hierzu werden mittels der Abtastvorrichtung 102 sukzessive mehrere längs der Abtastrichtung aufeinanderfolgende Probenebenen mit dem Lichtblatt beleuchtet. Dabei erzeugt die Detektionsoptik 108 jeweils ein Schichtbild, indem sie ein in dem Zwischenbildraum 112 erzeugtes Bild der jeweils beleuchteten Probenebene auf den Bildsensor 138 abbildet. Die einzelnen Schichtbilder werden zu einem Schichtbildstapel zusammengesetzt, der dann zu dem Volumenbild weiterverarbeitet wird.

In Schritt S12 wird dann mittels des Wechselsystems 132 das Lichtumlenkelement 404, 500, das sich gerade in dem Strahlengang der Transportoptik 106, 204, 302 befindet, gegen das andere Lichtumlenkelement 500 bzw. 404 ausgetauscht. Hierdurch werden die Beleuchtungsrichtung und die Detektionsrichtung des Lichtblattmikroskops 100, 200, 300 umgeschaltet.

In Schritt S14 werden die in Schritt S10 durchgeführten Schritte zum Erzeugen des ersten Volumenbildes wiederholt, um ein zweites Volumenbild zu erzeugen. Das zweite Volumenbild unterscheidet sich von dem ersten Volumenbild in der Beleuchtungsrichtung, aus der die Probenebenen mit dem Lichtblatt beleuchtet werden, und der Detektionsrichtung, in der diese Probenebenen auf den Bildsensor 138 abgebildet werden.

In Schritt S16 werden die beiden Volumenbilder zu einem einzigen hochaufgelösten Volumenbild verrechnet. Alternativ oder zusätzlich wird auf den Schritt S14 folgend das in dem Strahlengang der Transportoptik 106, 204, 302 befindliche Lichtumlenkelement 500, 404 mittels des Wechselsystems 132 gegen das andere Lichtumlenkelement 404 bzw. 500 ausgetaucht, und es werden die Schritte S10 bis S14 wiederholt. Hierdurch kann eine Zeitreihe von Volumenbildern erzeugt werden.

Der Begriff "und/oder" umfasst alle Kombinationen von einem oder mehreren der zugehörigen aufgeführten Elemente und kann mit "/" abgekürzt werden.

Obwohl einige Aspekte im Rahmen einer Vorrichtung beschrieben wurden, ist es klar, dass diese Aspekte auch eine Beschreibung des entsprechenden Verfahrens darstellen, wobei ein Block oder eine Vorrichtung einem Verfahrensschritt oder einer Funktion eines Verfahrensschritts entspricht. Analog dazu stellen Aspekte, die im Rahmen eines Verfahrensschritts beschrieben werden, auch eine Beschreibung eines entsprechenden Blocks oder Elements oder einer Eigenschaft einer entsprechenden Vorrichtung dar.

### Bezugszeichenliste

- 100: Lichtblattmikroskop
- 102: Abtastvorrichtung
- 104: Beleuchtungseinheit
- 106: Transportoptik
- 108: Detektionsoptik
- 110: Prozessor
- 112: Zwischenbildraum
- 114: Lichtquelle
- 116: Beleuchtungsobjektiv
- 118: Projektionsobjektiv
- 120: Tubuslinse
- 122,124: Okular
- 126: Tubuslinse
- 128: Objektiv
- 130: Probe
- 132: Wechselsystem
- 134: Detektionsobjektiv
- 136: Tubuslinse
- 138: Bildsensor
- 200: Lichtblattmikroskop
- 202: Beleuchtungseinheit
- 204: Transportoptik
- 206: Strahlteilerelement
- 300: Lichtblattmikroskop
- 302: Transportoptik
- 304: Projektionsobjektiv
- 306: Fokussiereinrichtung
- 308: Prozessor
- 400,402: Strahlbündel
- 404: Lichtumlenkelement
- 406: Eintrittspupille
- 500: Lichtumlenkelement
- O1, O2, O3: Optische Achse

## Patentansprüche

1. Optisches System für ein Lichtblattmikroskop (100, 200, 300), mit einer Transportoptik (106, 204, 302), die ausgebildet ist, ein Lichtblatt zum Beleuchten einer schräg zur optischen Achse der Transportoptik (106, 204, 302) liegenden Probenebene in eine Probe (130) abzubilden und die beleuchtete Probenebene in einen Zwischenbildraum (112) abzubilden, und
mit einer Detektionsoptik (108), deren optische Achse gegenüber der optischen Achse der Transportoptik (106, 204, 302) um eine Kippachse verkippt ist, die durch den Zwischenbildraum (112) verläuft,
**dadurch gekennzeichnet, dass** die Transportoptik (106, 204, 302) ein Wechselsystem (132) umfasst, das mindestens ein erstes und ein zweites Lichtumlenkelement (404, 500) hat und ausgebildet ist, eine Beleuchtungsrichtung, längs der das Lichtblatt die Probe (130) beleuchtet, umzuschalten, indem das erste und das zweite Lichtumlenkelement (404, 500) abwechselnd in einen Strahlengang der Transportoptik (106, 204, 302) eingebracht werden, und
das erste Lichtumlenkelement (404) eine teilweise Bildumkehr in nur einer Richtung bewirkt und das zweite Lichtumlenkelement (500) eine vollständige Bildumkehr in zwei Richtungen bewirkt.

2. Optisches System nach Anspruch 1, wobei die Transportoptik (106, 204, 302) ausgebildet ist, das in dem Zwischenbildraum (112) erzeugte Lichtblatt zum Beleuchten der schräg zur optischen Achse der Transportoptik (106, 204, 302) liegenden Probenebenen in die Probe (130) abzubilden.

3. Optisches System nach einem der vorhergehenden Ansprüche, mit einer Abtastvorrichtung (102, 306) zum schrittweisen Beleuchten mehrerer längs einer Abtastrichtung aufeinanderfolgender Probenebenen mit dem Lichtblatt, wobei die Detektionsoptik (108) ausgebildet ist, jeweils ein Schichtbild aus einem in dem Zwischenbildraum (112) erzeugten Bild der jeweiligen Probenebene zu erzeugen.

4. Optisches System nach Anspruch 3, wobei die Abtastvorrichtung (102) mindestens einen Rasterspiegel umfasst, durch welchen das Lichtblatt quer zur optischen Achse der Transportoptik (106, 204) bewegbar ist.

5. Optisches System nach Anspruch 3, wobei die Abtastvorrichtung (306) mindestens eine Fokussiereinrichtung zum Einstellen einer Schärfeebene der Transportoptik (302) umfasst.

6. Optisches System nach einem der Ansprüche 3 bis 5, mit einer Bildverarbeitungs- und Steuereinheit (110, 308), die ausgebildet ist, das erste Lichtumlenkelement (404) in den Strahlengang der Transportoptik (106, 204, 302) einzubringen, einen ersten Bilddatensatz zu erzeugen, der einen aus den Schichtbildern zusammengesetzten Schichtbildstapel darstellt, das zweite Lichtumlenkelement (500) in den Strahlengang der Transportoptik (106, 204, 302) einzubringen, einen zweiten Bilddatensatz zu erzeugen, der einen weiteren aus den Schichtbildern zusammengesetzten Schichtbildstapel darstellt, und den ersten Bilddatensatz und den zweiten Bilddatensatz zu einem Volumenbild der Probe (130) zu verarbeiten.

7. Optisches System nach einem der vorhergehenden Ansprüche, wobei die Transportoptik (106, 204, 302) ein einziges der Probe (130) zugewandtes Objektiv (128) hat, dessen optische Achse parallel zu der Kippachse ist.

8. Optisches System nach einem der vorhergehenden Ansprüche, wobei das erste Lichtumlenkelement (404) und das zweite Lichtumlenkelement (500) den Strahlengang der Transportoptik (106, 204, 302) jeweils um 90° ablenken.

9. Optisches System nach einem der vorhergehenden Ansprüche, wobei das erste Lichtumlenkelement (404) ein Umlenkspiegel oder ein Umlenkprisma ist.

10. Optisches System nach einem der vorhergehenden Ansprüche, wobei das zweite Lichtumlenkelement (500) ein Dachkantprisma, ein Dachkantspiegel oder ein Amici-Prisma ist.

11. Optisches System nach einem der vorhergehenden Ansprüche, wobei das zweite Lichtumlenkelement (500) eine Bilddrehung um 90°, 180° oder 270° bewirkt.

12. Lichtblattmikroskop (100, 200, 300) mit einem optischen System nach einem der vorhergehenden Ansprüche.

13. Lichtblattmikroskop (100, 200, 300) nach Anspruch 12, wobei das Lichtblattmikroskop (100, 200, 300) ein inverses Mikroskop ist.

14. Verfahren zum Beleuchten einer Probe (130) in einem Lichtblattmikroskop (100, 200, 300), bei dem
mittels einer Transportoptik (106, 204, 302) ein Lichtblatt zum Beleuchten einer schräg zur optischen Achse der Transportoptik (106, 204, 302) liegenden Probenebenen in eine Probe (130) abgebildet wird und die beleuchtete Probenebene in einen Zwischenbildraum (112) abgebildet wird,
dadurch gekennzeichnmet, dass eine Beleuchtungsrichtung, längs der das Lichtblatt die Probe (130) beleuchtet, umgeschaltet wird, indem ein erstes und ein zweites Lichtumlenkelement (404, 500) abwechselnd in einen Strahlengang der Transportoptik (106, 204, 302) eingebracht werden,
wobei das erste Lichtumlenkelement (404) eine teilweise Bildumkehr in nur einer Richtung bewirkt und das zweite Lichtumlenkelement (404, 500) eine vollständige Bildumkehr in zwei Richtungen bewirkt.

## Claims

1. Optical system for a light sheet microscope (100, 200, 300), with transport optics (106, 204, 302) which are configured to image a light sheet for illuminating a sample plane lying obliquely to the optical axis of the transport optics (106, 204, 302) into a sample (130) and to image the illuminated sample plane into an intermediate image space (112), and
with detection optics (108) of which the optical axis is tilted relative to the optical axis of the transport optics (106, 204, 302) about a tilt axis which runs through the intermediate image space (112),
**characterized in that** the transport optics (106, 204, 302) comprise an interchanging system (132) which has at least a first and a second light deflection element (404, 500) and are configured to switch an illumination direction along which the light sheet illuminates the sample (130) by alternately introducing the first and the second light deflection element (404, 500) into a beam path of the transport optics (106, 204, 302), and
wherein the first light deflecting element (404) causes a partial image reversal in only one direction and the second light deflecting element (500) causes a complete image reversal in two directions.

2. Optical system according to claim 1, wherein the transport optics (106, 204, 302) are configured to image the light sheet, generated in the intermediate image space (112), into the sample (130) for illuminating the sample planes lying obliquely to the optical axis of the transport optics (106, 204, 302).

3. Optical system according to any one of the preceding claims, with a scanning device (102, 306) for stepwise illumination of a plurality of sample planes, successively arranged in a scanning direction with the light sheet, wherein the detection optics (108) are configured to generate a layer image from an image of the respective sample plane, generated in the intermediate image space (112).

4. Optical system according to claim 3, wherein the scanning device (102) comprises at least one grid mirror, by means of which the light sheet is movable transversely to the optical axis of the transport optics (106, 204).

5. Optical system according to claim 3, wherein the scanning device (306) comprises at least one focusing apparatus for adjusting a focal plane of the transport optics (302).

6. Optical system according to any one of claims 3 to 5, with an image processing and control unit (110, 308) which is configured to introduce the first light deflection element (404) into the beam path of the transport optics (106, 204, 302), to generate a first image data set which represents a tomographic image stack composed of the tomographic images, to introduce the second light deflection element (500) into the beam path of the transport optics (106, 204, 302), to generate a second image data set which represents a further tomographic image stack, composed of the tomographic images, and to process the first image data set and the second image data set to form a volume image of the sample (130).

7. Optical system according to any one of the preceding claims, wherein the transport optics (106, 204, 302) have a single object lens (128) facing the sample (130), the optical axis of which is parallel to the tilt axis.

8. Optical system according to any one of the preceding claims, wherein the first light deflecting element (404) and the second light deflecting element (500) each deflect the beam path of the transport optics (106, 204, 302) by 90°.

9. Optical system according to any one of the preceding claims, wherein the first light deflecting element (404) is a deflecting mirror or a deflecting prism.

10. Optical system according to any one of the preceding claims, wherein the second light deflecting element (500) is a roof prism, a roof mirror or an Amici prism.

11. Optical system according to any one of the preceding claims, wherein the second light deflecting element (500) causes an image rotation by 90°, 180° or 270°.

12. Light sheet microscope (100, 200, 300) with an optical system according to any one of the preceding claims.

13. Light sheet microscope (100, 200, 300) of claim 12, wherein the light sheet microscope (100, 200, 300) is an inverted microscope.

14. Method for illuminating a sample (130) in a light sheet microscope (100, 200, 300), in which
by means of transport optics (106, 204, 302), a light sheet for illuminating a sample plane lying obliquely to the optical axis of the transport optics (106, 204, 302), is imaged into a sample (130) and the illuminated sample plane is imaged into an intermediate image space (112),
**characterized in that** an illumination direction along which the light sheet illuminates the sample (130) is switched by alternately introducing a first and a second light deflection element (404, 500) into a beam path of the transport optics (106, 204, 302), wherein the first light deflecting element (404) causes a partial image reversal in only one direction and the second light deflecting element (404, 500) causes a complete image reversal in two directions.

## Revendications

1. Système optique pour un microscope (100, 200, 300) à feuille de lumière, avec une optique de transport (106, 204, 302), qui est réalisée pour reproduire une feuille de lumière destinée à éclairer un plan d'échantillon situé à l'oblique par rapport à l'axe optique de l'optique de transport (106, 204, 302) dans un échantillon (130) et à reproduire le plan d'échantillon éclairé dans un espace d'image intermédiaire (112), et
avec une optique de détection (108), dont l'axe optique est basculé par rapport à l'axe optique de l'optique de transport (106, 204, 302) autour d'un axe de basculement, qui s'étend à travers l'espace d'image intermédiaire (112),
**caractérisé en ce que** l'optique de transport (106, 204, 302) comprend un système de remplacement (132), qui a au moins un premier et un deuxième élément de renvoi de lumière (404, 500) et est réalisé pour inverser une direction d'éclairage, le long de laquelle la feuille de lumière éclaire l'échantillon (130) **en ce que** le premier et le deuxième élément de renvoi de lumière (404, 500) sont introduits en alternance dans un chemin optique de l'optique de transport (106, 204, 302), et
le premier élément de renvoi de lumière (404) entraîne une inversion d'image partielle dans seulement une direction et le deuxième élément de renvoi de lumière (500) entraîne une inversion d'image totale dans deux directions.

2. Système optique selon la revendication 1, dans lequel l'optique de transport (106, 204, 302) est réalisée pour reproduire la feuille de lumière générée dans l'espace d'image intermédiaire (112) pour éclairer les plans d'échantillon situés de manière oblique par rapport à l'axe optique de l'optique de transport (106, 204, 302) dans l'échantillon (130).

3. Système optique selon l'une quelconque des revendications précédentes, avec un dispositif de balayage (102, 306) destinée à éclairer progressivement plusieurs plans d'échantillon se suivant le long d'une direction de balayage avec la feuille de lumière, dans lequel l'optique de détection (108) est réalisée pour générer respectivement une image en couches à partir d'une image, générée dans l'espace d'image intermédiaire (112), du plan d'échantillon respectif.

4. Système optique selon la revendication 3, dans lequel le dispositif de balayage (102) comprend au moins un miroir de trame, à travers lequel la feuille de lumière peut être déplacée de manière transversale à l'axe optique de l'optique de transport (106, 204).

5. Système optique selon la revendication 3, dans lequel le dispositif de balayage (306) comprend au moins un système de focalisation destiné à régler un niveau de netteté de l'optique de transport (302).

6. Système optique selon l'une quelconque des revendications 3 à 5, avec une unité de traitement d'image et de commande (110, 308), qui est réalisée pour introduire le premier élément de renvoi de lumière (404) sur le chemin optique de l'optique de transport (106, 204, 302), pour générer un premier ensemble de données d'images, qui constitue un empilement d'images en couches composé des images en couches, pour introduire le deuxième élément de renvoi de lumière (500) sur le chemin optique de l'optique de transport (106, 204, 302), pour générer un deuxième ensemble de données d'images, qui constitue un autre empilement d'images en couches composé des images en couches, et pour traiter le premier ensemble de données d'images et le deuxième ensemble de données d'images en une image volumétrique de l'échantillon (130).

7. Système optique selon l'une quelconque des revendications précédentes, dans lequel l'optique de transport (106, 204, 302) a un unique objectif (128) tourné vers l'échantillon (130), dont l'axe optique est parallèle à l'axe de basculement.

8. Système optique selon l'une quelconque des revendications précédentes, dans lequel le premier élément de renvoi de lumière (404) et le deuxième élément de renvoi de lumière (500) dévient le chemin optique de l'optique de transport (106, 204, 302) respectivement de 90°.

9. Système optique selon l'une quelconque des revendications précédentes, dans lequel le premier élément de renvoi de lumière (404) est un miroir de renvoi ou un prisme de renvoi.

10. Système optique selon l'une quelconque des revendications précédentes dans lequel le deuxième élément de renvoi de lumière (500) est un prisme triangulaire, un miroir triangulaire ou un prisme d'Amici.

11. Système optique selon l'une quelconque des revendications précédentes, dans lequel le deuxième élément de renvoi de lumière (500) entraîne une rotation d'image de 90°, 180° ou 270°.

12. Microscope (100, 200, 300) à feuille de lumière avec un système optique selon l'une des revendications précédentes.

13. Microscope (100, 200, 300) à feuille de lumière selon la revendication 12, dans lequel le microscope (100, 200, 300) à feuille de lumière est un microscope inverse.

14. Procédé d'éclairage d'un échantillon (130) dans un microscope (100, 200, 300) à feuille de lumière, dans lequel
une feuille de lumière destinée à éclairer un plan d'échantillon situé de manière oblique par rapport à un axe optique de l'optique de transport (106, 204, 302) est reproduite dans un échantillon (130) au moyen d'une optique de transport (106, 204, 302) et le plan d'échantillon éclairé est reproduit dans un espace d'image intermédiaire (112),
**caractérisé en ce qu'**une direction d'éclairage, le long de laquelle la feuille de lumière éclaire l'échantillon (130), est inversée **en ce qu'**un premier et un deuxième élément de renvoi de lumière (404, 500) sont introduits en alternance sur un chemin optique de l'optique de transport (106, 204, 302),
dans lequel le premier élément de renvoi de lumière (404) entraîne une inversion d'image partielle dans seulement une direction et le deuxième élément de renvoi de lumière (404, 500) entraîne une inversion d'image totale dans deux directions.
